# EUROPÄISCHE PATENTSCHRIFT

(11) **EP 3 821 163 B1**
(45) Veröffentlichungstag und Bekanntmachung des Hinweises auf die Patenterteilung: **06.09.2023**
(21) Anmeldenummer: 19749207.7
(22) Anmeldetag: 11.07.2019
(51) Int. Cl.: F16L 55/18, F16L 55/26, F16L 55/40, B29C 35/08

(54) **LED-UV- VORRICHTUNG UND SYSTEM FÜR DIE ROHRSANIERUNG**
LED UV DEVICE AND SYSTEM FOR PIPE REHABILITATION
APPAREIL ET SYSTÈME LED-UV POUR L'ASSAINISSEMENT DES TUYAUX

(30) Priorität: 13.07.2018 DE 102018116978
(43) Veröffentlichungstag der Anmeldung: 19.05.2021
(73) Patentinhaber: Trelleborg Sealing Profiles Germany GmbH, 63920 Großheubach (DE)
(72) Erfinder: VOGT, Jörg, 44879 Bochum (DE); REUTEMANN, Thomas, 87527 Sonthofen (DE)
(74) Vertreter: Schneiders & Behrendt Bochum
(86) Internationale Anmeldenummer: PCT/EP2019/068708
(87) Internationale Veröffentlichungsnummer: WO 2020/011934

(56) Entgegenhaltungen:
- EP-A1- 0 564 741
- EP-A1- 3 257 647
- EP-A1- 3 336 404
- EP-A1- 3 346 175
- WO-A1-2017/060523
- CH-A5- 676 029
- DE-A1- 10 162 857
- DE-U1- 29 820 521
- JP-A- 2008 142 996

## Beschreibung

Die Erfindung betrifft eine Vorrichtung zur Aushärtung eines in UV-härtendem Kunstharz getränkten Kunststoffschlauchs in einem Kanalrohr mit einem länglichen Gehäuse, dessen Längsachse sich in Bearbeitungsrichtung längs des Kanalrohres erstreckt, und wenigstens einer UV-Strahlung emittierenden Lichtquelle, wobei die Lichtquelle durch mehrere eine UV-Strahlung emittierende Leuchtdioden gebildet ist, wobei die Leuchtdioden im Gehäuse so in Bearbeitungsrichtung ausgerichtet sind, dass die Hauptabstrahlrichtung der von den Leuchtdioden emittierten UV-Strahlung im Wesentlichen parallel zur Längsachse des Gehäuses orientiert ist, wobei die emittierte UV-Strahlung auf mindestens einen Reflektor trifft, der die emittierte UV-Strahlung radial zur Längsachse des Gehäuses reflektiert, sodass die emittierte UV-Strahlung quer zur Bearbeitungsrichtung auf den zu härtenden Kunststoffschlauch trifft. Ferner betrifft die Erfindung ein System aus mehreren solcher Vorrichtungen.

Eine solche Vorrichtung ist aus EP 3 257 647 A1 bekannt. Eine weitere Vorrichtung zur Aushärtung eines in UV-härtendem Kunstharz getränkten Kunststoffschlauchs in einem Kanalrohr und ein System mit mehreren Vorrichtungen sind aus der EP 2 129 956 B1 bekannt.

Bei der Sanierung von Rohren oder allgemein von Leitungen, wie z.B. Kanälen oder an die Kanalisation angeschlossenen Rohrleitungen, wurden in den letzten Jahrzehnten verschiedene Verfahren entwickelt, bei denen Auskleidungsschläuche eingesetzt werden. Bei undichten, verschlissenen oder schlecht gewarteten Rohren, wie z.B. Kanalrohren, erfolgt die Sanierung heute hauptsächlich durch den Einsatz von Kunststoffschläuchen in den Rohrleitungen. Die Sanierung wird durchgeführt, um Infiltrationen und Leckagen zu vermeiden, welche die Umwelt beeinträchtigen können. Die Aufgabe bei der Sanierung von Rohrleitungen ist es, vorbeugende Wartung und Reparaturen durchzuführen, um weitere Schäden, z.B. durch das Austreten von Flüssigkeiten, zu vermeiden. Die Sanierung von Rohrleitungen durch den Einsatz von Kunststoffschläuchen, sog. Linern kann vorteilhaft in erdverlegten Rohrsystemen, z.B. bei der Sanierung von Kanälen und/oder Schächten, eingesetzt werden. Die Sanierung mit Rohrleitungen kann auch oberirdisch erfolgen, z.B. zur Sanierung von vertikalen Rohren, wie Prozessleitungen, Fallleitungen oder auch Lüftungskanälen. Der Hauptvorteil für den Einsatz der Liner in einer Rohrleitung und der Aushärtung des Liners, besteht darin, dass die Sanierung von der Innenseite der Rohrleitung aus erfolgt und somit der Zugang zur Rohrleitung von außen nicht erforderlich ist. Damit ist beispielsweise das Ausheben eines Lochs für den Zugang von außen zu einer unterirdisch verlegten Rohrleitung nicht erforderlich. Die Technik der Sanierung eines unterirdischen Rohres durch Einbringen eines mit einem Harz imprägnierten Kunststoffschlauchs in das Rohr und das Anbringen des Kunststoffschlauchs an der Innenfläche des Rohres durch Druck auf die Innenseite des Kunststoffschlauchs und die gleichzeitige Aushärtung des Harzes und damit die Verfestigung des Kunststoffschlauchs ist seit vielen Jahren verbessert worden. Seit mehr als einem Jahrzehnt wird der Harz des Liners auch mit einer UV-Strahlungsquelle in die Rohrleitung gehärtet.

Der Einsatz von UV-Strahlung reduziert zwar den Energieeinsatz gegenüber der konventionellen Technik der Härtung mit Heißwasser oder Heißdampf, allerdings sind die häufig eingesetzten UV-Strahler auf der Vakuumröhrentechnologie basierend und daher zum einen recht unzuverlässig und zum anderen variiert die vom UV-Strahler erzeugte Energie bzw. Leistung während der kurzen Lebensdauer des UV-Strahlers, was die Nutzung der UV-Strahler relativ nachteilig macht.

Die Druckschrift EP 2 129 956 B1 schlägt eine Vorrichtung mit UV-Strahlung emittierenden Leuchtdioden vor, welche an der Außenwand des Gehäuses angebracht und gleichmäßig verteilt sind. Mit der gleichmäßigen Verteilung der Leuchtdioden an der Außenwand des Gehäuses wird versucht eine gleichmäßige Bestrahlung des in UV-härtendem Kunstharz getränkten Kunststoffschlauchs in einem Kanalrohr zu erreichen. Doch bereits durch den Ausfall einzelner Leuchtdioden kann eine gleichmäßige Bestrahlung nicht mehr sichergestellt werden. Außerdem ist die Strahlungsverteilung durch die von den Leuchtdioden vorgegebene Hauptabstrahlrichtung ungleichmäßig und die effektiv bestrahlte Fläche ist begrenzt.

Die Druckschrift EP 3 257 647 A1 schlägt hingegen vor, die Leuchtdioden an der Stirnseite eines zylinderförmigen Körpers anzubringen, um eine Kühlung der Leuchtdioden sicherzustellen. Nachteilig an der hier beschriebenen Lösung ist, dass die Anbringung der Leuchtdioden auf dem Kühlkörper aufwendig ist und der Kühlkörper viel Bauraum einnimmt.

Es ist daher Aufgabe der Erfindung, eine verbesserte Vorrichtung anzugeben, die eine effektive, fehlerunanfällige und gleichmäßige Bestrahlung eines in UV-härtendem Kunstharz getränkten Kunststoffschlauchs in einem Kanalrohr ermöglicht, wobei sich die Vorrichtung einfacher herstellen und montieren lassen soll und die Leuchtdioden sollen sich besonders effektiv und platzsparend kühlen lassen.

Gelöst wird diese Aufgabe durch eine Vorrichtung mit den Merkmalen des Anspruchs 1 sowie durch ein System gemäß Anspruch 13.

Dadurch, dass die mindestens eine Leuchtdiode im Gehäuse so in Bearbeitungsrichtung ausgerichtet ist, dass die Hauptabstrahlrichtung der von der Leuchtdiode emittierten UV-Strahlung im Wesentlichen parallel zur Längsachse des Gehäuses orientiert ist, wobei die emittierte UV-Strahlung auf mindestens einen Reflektor trifft, der die emittierte UV-Strahlung radial zur Längsachse des Gehäuses reflektiert, sodass die emittierte UV-Strahlung quer zur Bearbeitungsrichtung auf den zu härtenden Kunststoffschlauch trifft, kann eine effektive und gleichmäßige Bestrahlung eines in UV-härtendem Kunstharz getränkten Kunststoffschlauchs in einem Kanalrohr ermöglicht werden. Gerade mit der Ausrichtung der Leuchtdiode im Gehäuse, sodass die Hauptabstrahlrichtung der von der Leuchtdiode emittierten UV-Strahlung im Wesentlichen parallel zur Längsachse des Gehäuses orientiert ist, kann die Strahlung besonders effektiv auf einem Reflektor radial zur Längsachse des Gehäuses reflektiert werden, sodass die emittierte UV-Strahlung gleichmäßig quer zur Bearbeitungsrichtung auf den zu härtenden Kunststoffschlauch trifft. Mit der Reflexion mittels des Reflektors lässt sich eine besonders gleichmäßige Strahlungsverteilung auf der Oberfläche des Kunststoffschlauchs erreichen. Mit dem Reflektor kann zudem die effektiv bestrahlte Fläche vergrößert werden. Sind mehrere Leuchtdioden derart im Gehäuse ausgerichtet, führt der Ausfall einzelner Leuchtdioden nicht zu einer ungleichmäßigen Bestrahlung des Kunststoffschlauchs, da durch die Reflexion am Reflektor immer noch die gesamte Oberfläche des Rohres von den weiteren Leuchtdioden bestrahlt wird. Damit ist eine fehlerunanfällige Vorrichtung für die Aushärtung eines in UV-härtendem Kunstharz getränkten Kunststoffschlauchs in einem Kanalrohr gegeben.

Erfindungsgemäß ist vorgesehen, dass die Lichtquelle mehrere auf einer Platine in einer Ebene nebeneinander angeordnete Leuchtdioden umfasst. Mit der Anordnung mehrerer Leuchtdioden auf einer ebenen Platine kann eine besonders einfache Herstellung und Montage der Lichtquelle realisiert werden. Außerdem lassen sich die Leuchtdioden mit Standard-Herstellungstechnologien sehr einfach auf der Platine anordnen und die Platine sich insgesamt im Gehäuse so einfach ausrichten, dass die Hauptabstrahlrichtung der von den Leuchtdioden emittierten UV-Strahlung im Wesentlichen parallel zur Längsachse des Gehäuses orientiert ist.

Die Lichtquelle umfasst mehrere Platinen. Mit mehreren Platinen kann die Zahl der Leuchtdioden und damit die abgegebene Strahlungsleistung einfach erhöht werden.

Erfindungsgemäß ist vorgesehen, dass mindestens zwei Platinen mit vorderseitig UV-Strahlung emittierenden Leuchtdioden im Gehäuse rückseitig zueinander orientiert angeordnet sind. Die Leuchtdioden auf zwei derartig zueinander orientierten Platinen lassen sich besonders effektiv kühlen, und zwar z.B. mittels eines Luftstroms in dem Zwischenraum zwischen den Rücken an Rücken angeordneten Platinen. Außerdem lässt sich mit den derartig auf zwei Platinen angeordneten Leuchtdioden eine besonders effektive und gleichmäßige Bestrahlung eines in UV-härtendem Kunstharz getränkten Kunststoffschlauchs in einem Kanalrohr erreichen.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Eine vorteilhafte Ausführung sieht vor, dass mehrere Leuchtdioden gruppenweise in konzentrischen Ringen verschaltet sind. Mit der Verschaltung der Leuchtdioden in konzentrischen Ringen kann sichergestellt werden, dass bei Ausfall einzelner konzentrische Ringe immer noch die gesamte Oberfläche des in UV-härtendem Kunstharz getränkten Kunststoffschlauchs von den anderen Ringen bestrahlt wird, sodass eine gleichmäßige Aushärtung sichergestellt ist.

Eine besonders vorteilhafte Ausführung der Erfindung sieht vor, dass der mindestens eine Reflektor eine Konusform aufweist, wobei die Konusachse mit der Längsachse des Gehäuses zusammenfällt. Mit der Konusform des Reflektors ist eine besonders gleichmäßige Strahlungsverteilung auf der inneren Oberfläche des Kunststoffschlauchs erreichbar. Die in Hauptabstrahlrichtung von den Leuchtdioden im Wesentlichen parallel zur Längsachse des Gehäuses emittierte UV-Strahlung kann durch den konusförmigen Reflektor besonders gleichmäßig radial zur Längsachse des Gehäuses reflektiert werden, sodass die emittierte UV-Strahlung quer zur Bearbeitungsrichtung effektiv auf den zu härtenden Kunststoffschlauch trifft.

Gemäß einer bevorzugten Ausgestaltung der Erfindung ist vorgesehen, dass die Oberfläche des Reflektors eine konkave Krümmung aufweist, so dass die emittierte UV-Strahlung auf der Oberfläche des zu härtenden Kunststoffschlauchs konzentriert wird. Mit der konkaven Krümmung lässt sich die reflektierte UV-Strahlung sehr effektiv auf der Oberfläche des zu härtenden Kunststoffschlauchs konzentrieren, sodass eine schnelle und zuverlässige Aushärtung bei der Sanierung erreicht wird, indem die Strahlungsdichte auf der Oberfläche erhöht wird.

Eine besonders vorteilhafte Ausführung der Erfindung sieht vor, dass die Oberfläche des Reflektors eine konvexe Krümmung aufweist, so dass die emittierte UV-Strahlung aufgefächert und auf der Oberfläche des zu härtenden Kunststoffschlauchs verteilt wird. Mit der konvexen Krümmung lässt sich die reflektierte UV-Strahlung sehr effektiv auf der Oberfläche des zu härtenden Kunststoffschlauchs verteilen, sodass eine gleichmäßige und vollständige Aushärtung bei der Sanierung erreicht wird, indem die Strahlung auf der Oberfläche verteilt wird.

Besonders vorteilhaft ist eine Ausführungsform, die vorsieht, dass im Gehäuse mindestens zwei Reflektoren angeordnet sind. Mit der Anordnung von mehreren Reflektoren kann die im Wesentlichen parallel zur Längsachse des Gehäuses emittierte UV-Strahlung an mehreren Stellen radial zur Längsachse des Gehäuses reflektiert werden, sodass die emittierte UV-Strahlung an mehreren in Bearbeitungsrichtung hintereinander liegenden Stellen auf den zu härtenden Kunststoffschlauch trifft. Dies verbessert die Aushärtung des Kunststoffschlauchs durch die emittierte UV-Strahlung, da eine gegebene Stelle an der Oberfläche des Kunststoffschlauchs insgesamt über einen längeren Zeitraum bestrahlt wird.

Eine besonders vorteilhafte Ausführung der Erfindung bezieht sich darauf, dass im Gehäuse mindestens ein Lüfter, vorzugsweise zwei Lüfter, zur Erzeugung eines Kühlluftstromes zur Kühlung der Leuchtdioden vorgesehen ist. Mit der Integration eines Lüfters im Gehäuse kann ein Kühlluftstrom zur Kühlung der Leuchtdioden direkt in dem Gehäuse erzeugt werden.

Eine vorteilhafte Ausgestaltung sieht vor, dass der Kühlluftstrom in Richtung der Längsachse des Gehäuses durch das Innere mindestens eines Reflektors passiert. Der Reflektor wird dabei vorteilhaft zur Führung des Kühlluftstroms genutzt.

Eine besonders vorteilhafte Ausgestaltung der Erfindung sieht vor, dass zumindest ein Teilluftstrom des Kühlluftstromes entlang mindestens einer Rückseite einer Leuchtdiode bzw. einer Platine, auf der die Leuchtdiode angeordnet ist, radial nach außen geleitet wird, um an der Rückseite der Leuchtdiode bzw. der Platine angeordnete Kühlkörper zu kühlen. Über einen so nach außen geleiteten Teilluftstrom lassen sich die Leuchtdioden auf den Platinen besonders einfach kühlen. Sind mindestens zwei Platinen mit vorderseitig UV-Strahlung emittierenden Leuchtdioden im Gehäuse rückseitig mit Kühlkörpern zueinander orientiert angeordnet, können durch die Platinen mit den Kühlkörpern Kanäle gebildet werden, durch die sich jeweils ein Teilluftstrom radial nach außen leiten lässt.

Besonders vorteilhaft ist eine Ausführungsform, die vorsieht, dass im Gehäuse mindestens ein Peltierelement zur Kühlung der Leuchtdioden vorgesehen ist. Dieses Peltierelement ist vorzugsweise rückseitig an den Leuchtdioden, besonders bevorzugt rückseitig an der jeweils mit Leuchtdioden bestückten Platinen angeordnet. Hier kühlt das Peltierelement vorteilhafterweise die Leuchtdioden und führt die Abwärme ab. Das Peltierelement ist hierzu bevorzugt mit der wärmeabgebenden Seite mit mindestens einem Kühlkörper gekoppelt, der in einem Teilluftstrom gekühlt wird. Somit unterstützt das Peltierelement aktiv die Abgabe der Abwärme der Leuchtdiode durch den Kühlkörper an die Umgebung. Hierdurch wird eine effektive Kühlung der Leuchtdioden durch den Kühlluftstrom zur Kühlung der Leuchtdioden im Gehäuse erreicht. Sind mindestens zwei Platinen mit vorderseitig UV-Strahlung emittierenden Leuchtdioden im Gehäuse rückseitig mit Kühlkörpern zueinander orientiert angeordnet, können Peltierelemente zwischen den Platinen und dem Kühlkörpern für eine verbesserte Kühlung der Leuchtdioden durch den zwischen den Platinen radial nach außen geleiteten Teilluftstrom sorgen.

Eine besonders vorteilhafte Ausführung der Erfindung sieht vor, dass die Lichtquelle UV-Strahlung nur in einem Spektralbereich mit einer Wellenlänge von 360 bis 420 nm, vorzugsweise mit einer Wellenlänge von 380 bis 410 nm, weiter vorzugsweise mit einer Wellenlänge von 390 bis 400 nm, emittiert. Die Erzeugung von UV-Strahlung in diesem begrenzten Spektralbereich ermöglicht, weniger Leuchtdioden an der Lichtquelle zu verwenden, wodurch die Leistung der Lichtquelle geringer ausfällt, was zu weniger Wärmeentwicklung führt. Dennoch kann mit diesem begrenzten Spektralbereich eine effektive Aushärtung eines in UV-härtendem Kunstharz getränkten Kunststoffschlauchs in einem Kanalrohr erreicht werden. Vorzugsweise werden auf einer Platine 16 bis 18 Leuchtdioden verwendet, wobei jede der Leuchtdioden vorteilhafterweise eine Leistung von 3 Watt aufweist. Die Leuchtdioden können auch in 4er-Gruppen geclustert angeordnet sein.

Besonders vorteilhaft ist eine Ausführungsform, die vorsieht, dass die Vorrichtung mindestens einen Sensor aufweist, der dazu ausgebildet ist, die Intensität der von der Leuchtdiode emittierten UV-Strahlung zu erfassen. Über die sensorische Erfassung der tatsächlich durch die Leuchtdiode emittierten UV-Strahlung kann die Funktionsweise der Leuchtdioden überprüft werden und die Voraussetzungen für die Aushärtung des in UV-härtendem Kunstharz getränkten Kunststoffschlauchs kontrolliert werden. Der Sensor kann als Fotowiderstand ausgebildet sein. Mit einem solchen Sensor lassen sich die Betriebsparameter der Leuchtdioden leicht überprüfen. Vorzugsweise weist die Vorrichtung mehrere solcher Sensoren auf, sodass die sensorische Erfassung der Intensität aller Leuchtdioden sichergestellt werden kann.

Ferner ist Gegenstand der Erfindung ein System mit mindestens zwei der zuvor und im Folgenden beschriebenen Vorrichtungen, wobei die einzelnen Vorrichtungen des Systems über Kugelgelenke in Bearbeitungsrichtung hintereinander gekoppelt sind. Mit der Kopplung mehrerer Vorrichtungen zu einem System kann eine besonders effektive Aushärtung eines in UV-härtendem Kunstharz getränkten Kunststoffschlauchs in einem Kanalrohr erreicht werden. Mit mehreren hintereinander gekoppelten Vorrichtungen kann das System während der Aushärtung schneller in Bearbeitungsrichtung durch den Kunststoffschlauch im Kanalrohr geführt werden.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäße Vorrichtung,
- Figur 2: Schnittdarstellung durch die Vorrichtung,
- Figur 3: erfindungsgemäßes System,
- Figur 4: Illustration der Strahlungsreflexion,
- Figur 5: Illustration des Kühlluftstroms durch die Vorrichtung,
- Figur 6: weitere erfindungsgemäße Vorrichtung,
- Figur 7: erfindungsgemäße Vorrichtung.

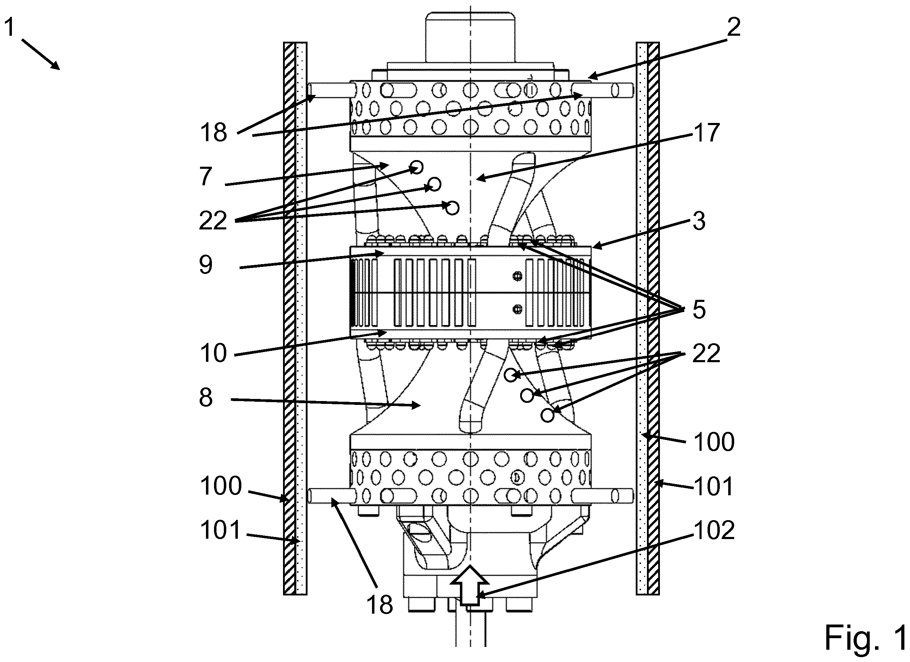

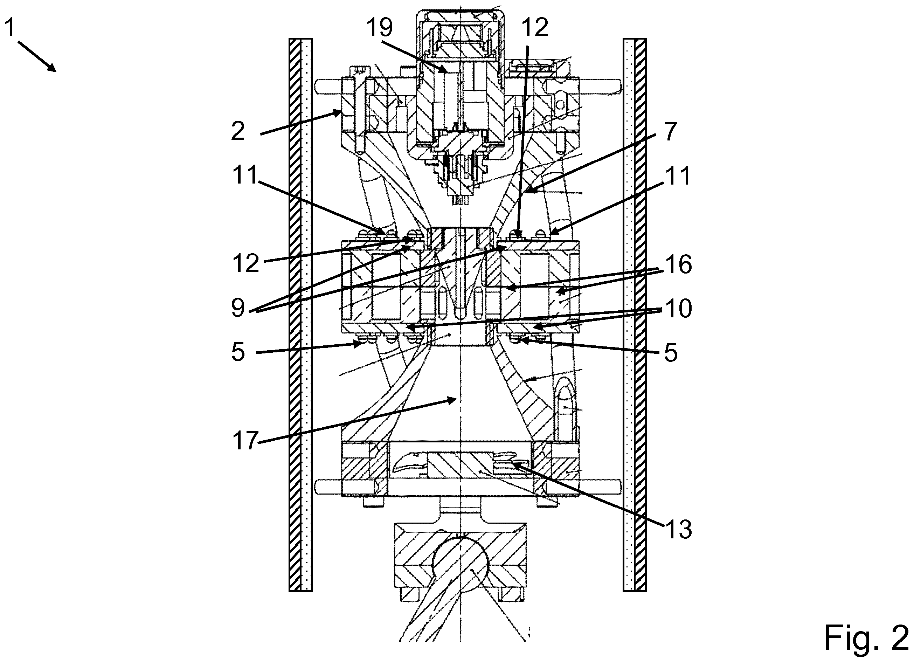

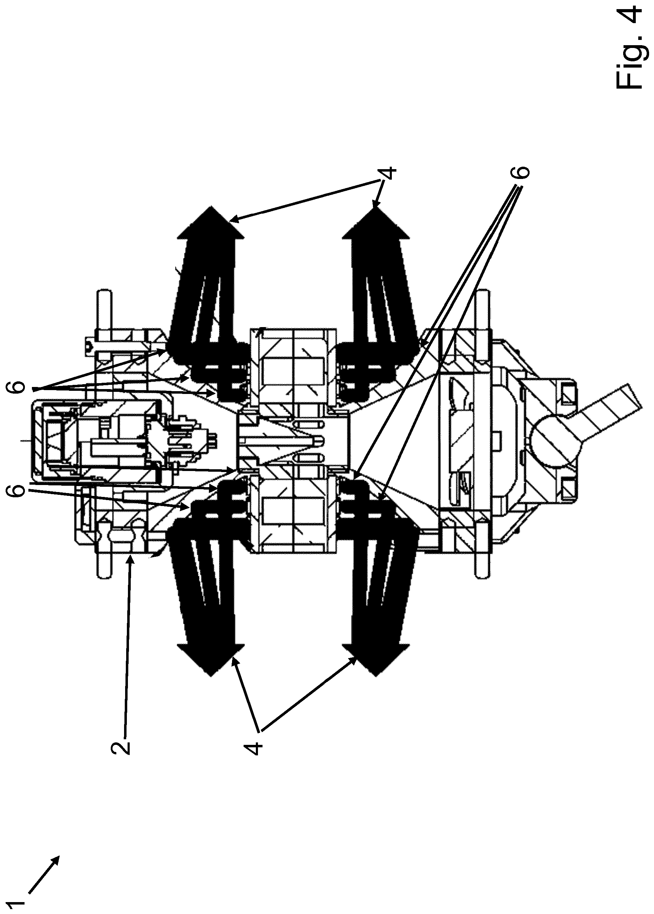

In der Figur 1 mit dem Bezugszeichen 1 bezeichnet ist eine erfindungsgemäße Vorrichtung dargestellt. Die Vorrichtung 1 eignet sich zur Aushärtung eines in UV-härtendem Kunstharz getränkten Kunststoffschlauchs 100 in einem Kanalrohr 101. Das Kanalrohr 101 und der an der Kanalrohrwand angelegte Kunststoffschlauch 100 sind in den Figuren 1 und 2 schematisch in Schnittdarstellung gezeigt. Das längliche Kanalrohr gibt die Bearbeitungsrichtung 102 vor, in welcher die Vorrichtung 1 zur Aushärtung des Kunststoffschlauchs 100 an der Kanalwand durch das Kanalrohr 101 geführt wird. Die Bearbeitungsrichtung 102 verläuft parallel zur Längsachse des Rohres 101. An dem länglichen Gehäuse 2, dessen Längsachse 17 sich in Bearbeitungsrichtung 102 längs des Kanalrohrs 101 erstreckt, sind Abstandshalter vorzugsweise in Form von Borsten 18, alternativ in Form von Gleitkufen oder Rädern, angeordnet, die das Gehäuse 2 der Vorrichtung 1 in dem Kanalrohr 101 führen. Die Vorrichtung 1 verfügt über eine UV-Strahlung 4 (Fig. 4) emittierende Lichtquelle 3, welche durch UV-Strahlung 4 (Fig. 4) emittierenden Leuchtdioden 5 gebildet ist. Die Leuchtdioden 5 sind im Gehäuse 2 so ausgerichtet, dass die Hauptabstrahlrichtung 6 (Fig. 4) der von den Leuchtdioden 5 emittierten UV-Strahlung 4 (Fig. 4) im Wesentlichen parallel zur Längsachse 17 des Gehäuses 2 orientiert ist. Im Wesentlichen bedeutet in diesem Zusammenhang, dass die Hauptabstrahlrichtung gemäß der Abstrahlcharakteristik der Leuchtdioden 5 parallel zur Längsachse 17 des Gehäuses 2 orientiert ist. Die Lichtquelle 3 ist durch zwei Platinen 9, 10 gebildet, die jeweils mehrere auf den Platinen 9, 10 in einer Ebene nebeneinander angeordnete Leuchtdioden 5 aufweisen. Die Strahlung 4 (Fig. 4) emittierenden Leuchtdioden 5 sind vorderseitig auf den Platinen 9, 10 angeordnet, wobei die Platinen 9, 10 im Gehäuse 2 rückseitig zueinander weisend angeordnet sind. Die von den Leuchtdioden 5 der beiden Platinen 9, 10 emittierte UV-Strahlung 4 (Fig. 4) trifft jeweils auf einen Reflektor 7, 8, der die emittierte Strahlung 4 (Fig. 4) radial zur Längsachse 17 des Gehäuses 2 reflektiert, sodass die emittierte Strahlung 4 (Fig. 4) quer zur Bearbeitungsrichtung 102 auf den zu härtenden Kunststoffschlauch 100 trifft. Der Strahlengang der durch die Leuchtdioden 5 emittierten UV-Strahlung 4 (Fig. 4) ist in Figur 4 angedeutet und wird weiter unten noch näher erläutert. Die Reflektoren 7, 8 weisen jeweils eine Konusform auf, wobei die Konusform mit der Längsachse 17 des Gehäuses 2 zusammenfällt. Die Reflektoren 7, 8 sind so angeordnet, dass der Durchmesser des Konus von der Lichtquelle 3 aus entlang der Längsachse 17 radial zunimmt. Die Oberfläche der Reflektoren 7, 8 weist eine konkave Krümmung auf, die dazu führt, dass die durch die Leuchtdioden 5 emittierte UV-Strahlung 4 (Fig. 4) auf der Oberfläche des zu härtenden Kunststoffschlauchs 100 konzentriert wird. Auf der Oberfläche der Reflektoren 7, 8 sind mehrere Sensoren 22 zu erkennen, welche dazu ausgebildet sind, die Intensität der von den Leuchtdioden 5 emittierten UV-Strahlung 4 (Fig. 4) zu erfassen. Die Sensoren 22 sind, wie zu erkennen ist, auf der Oberfläche der Reflektoren 7, 8 verteilt. Hierdurch kann die tatsächlich durch die Leuchtdioden 5 emittierte UV-Strahlung sensorisch erfasst werden. Über die auf die Sensoren 22 auftreffende UV-Strahlung kann die Funktionsweise der Leuchtdioden 5 überprüft werden und die Voraussetzungen für die Aushärtung des in UV-härtendem Kunstharz getränkten Kunststoffschlauchs 100 kontrolliert werden. Hierdurch lassen sich die Betriebsparameter der Leuchtdioden 5 leicht überprüfen.

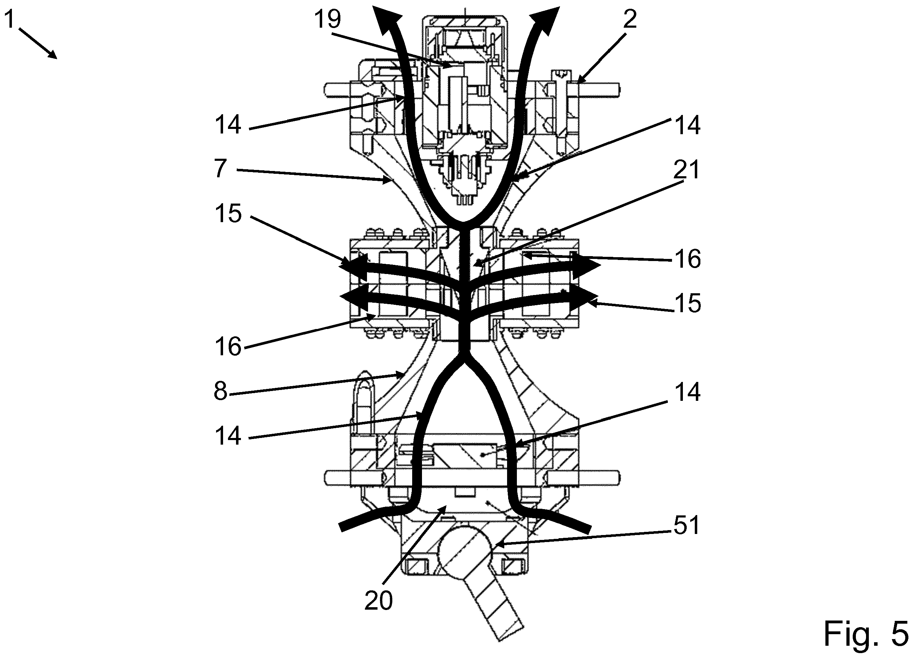

Die Figur 2 zeigt eine Schnittdarstellung durch die Vorrichtung 1 gemäß Figur 1. In dieser Darstellung gut zu erkennen ist, dass die Leuchtdioden 5 gruppenweise in konzentrischen Ringen 11, 12 um die Längsachse 17 des Gehäuses 2 angeordnet sind. In diesen konzentrischen Ringen 11, 12 sind die Leuchtdioden 5 gruppenweise miteinander verschaltet. Bevorzugt werden 16 bis 18 Leuchtdioden pro Platine 9, 10 verwendet. Die Leuchtdioden können auch in 4er Cluster eingesetzt werden. Weiterhin ist in Figur 2 gut zu erkennen, dass an der Rückseite der Leuchtdioden 5 Kühlkörper 16 zur Kühlung der Strahlungsquelle 3 angeordnet sind. Im unteren Gehäuseteil des Gehäuses 2 ist ein Lüfter 13 zur Erzeugung eines Kühlluftstroms 14 (Fig. 5) zur Kühlung der Leuchtdioden 5 vorgesehen. Um eine besonders effektive Kühlung der Leuchtdioden 5 zu erreichen, kann in den Kunststoffschlauch 100 zur Anlage am Kanalrohr 101 eingeleitete Luft extern gekühlt werden. Im oberen Gehäuseteil des Gehäuses 2 ist ein Kameramodul 19 eingebaut, mit welchem die erfolgte Aushärtung, die Lage des Kunststoffschlauchs 100 im Kanalrohr 101 und die Position der Vorrichtung 1 im Kanalrohr 101 überprüft werden kann.

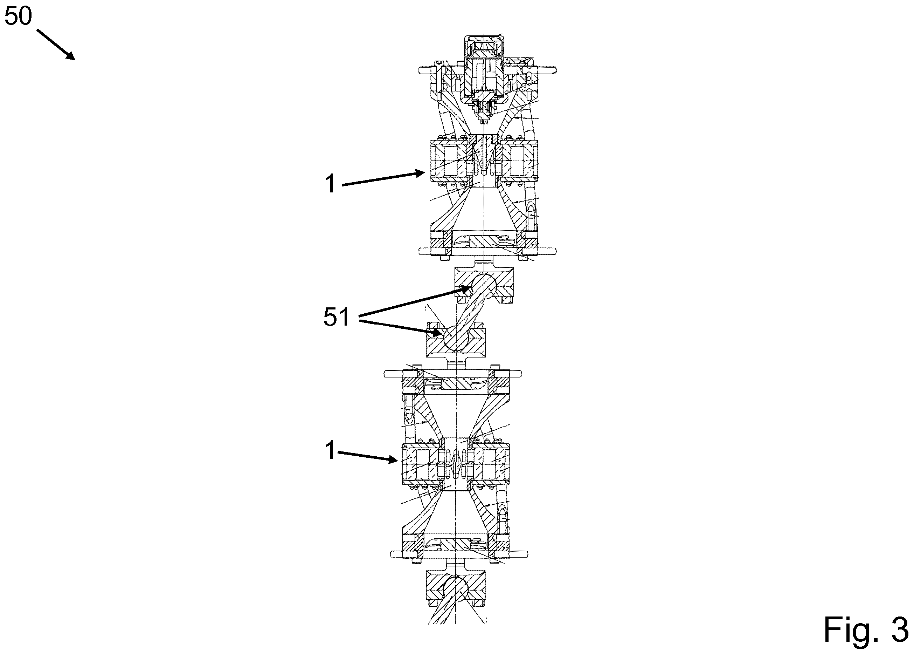

Figur 3 zeigt ein System 50 aus mehreren über Kugelgelenke 51 hintereinander aneinander gekoppelten Vorrichtungen 1 zur Aushärtung eines in UV-härtendem Kunstharz getränkten Kunststoffschlauchs 100 in einem Kanalrohr 101. Über die dargestellten Kugelgelenke 51 lassen sich die gezeigten Vorrichtungen 1 aneinandergekoppelt in dem Kanalrohr 101 (Fig. 1. u. 2) in Bearbeitungsrichtung 102 (Fig. 1. u. 2) hintereinander durch den in UV-härtendem Kunstharz getränkten Kunststoffschlauch 100 führen, um gemeinsam die Aushärtung an der Kanalrohrwand zu erreichen.

Mit Figur 4 ist eine Darstellung zur Reflexion der von den Leuchtdioden 5 emittierten UV-Strahlung 4 an den Reflektoren 7, 8 (Fig. 1 u. 2) gegeben. Wie zu erkennen ist, wird die von den Leuchtdioden 5 (Fig. 1 u. 2) emittierte UV-Strahlung 4 im Wesentlichen parallel zur Längsachse 17 des Gehäuses 2 abgestrahlt. Damit sind die Leuchtdioden 5 (Fig. 1 u. 2) auf den Platinen 9, 10 (Fig. 1 u. 2) so ausgerichtet, dass die Hauptabstrahlrichtung 6 längs der Längsachse 17 (Fig. 1 u. 2) des Gehäuses 2 in Bearbeitungsrichtung 102 (Fig. 1 u. 2) verläuft. Wie in Figur 4 angedeutet, trifft die emittierte UV-Strahlung 4 auf die beiden konusförmig ausgebildeten Reflektoren 7, 8 (Fig. 1 u. 2) und wird radial zur Längsachse 17 (Fig. 1 u. 2) des Gehäuses 2 reflektiert, sodass die emittierte Strahlung 4 quer zur Bearbeitungsrichtung 102 (Fig. 1 u. 2) auf den zu härtenden Kunststoffschlauch 100 (Fig. 1 u. 2) trifft. Durch die konvexe Krümmung der Oberfläche der konusförmigen Reflektoren 7, 8 (Fig. 1 u. 2) wird die emittierte UV-Strahlung 4, wie in Figur 4 gut zu erkennen, auf der Oberfläche des zu härtenden Kunststoffschlauchs 100 (Fig. 1 u. 2) konzentriert. Hierdurch bilden sich radial um die Reflektoren herum Aushärtungsbereiche in denen eine gleichmäßige und effektive Aushärtung des in UV-härtendem Kunstharz getränkten Kunststoffschlauchs 100 durch die emittierte UV-Strahlung 4 im Kanalrohr 101 erfolgt. Aus Figur 4 gut ersichtlich ist, dass die UV-Strahlung 4 in den Aushärtungsbereichen auch bei Ausfall einzelner Leuchtdioden 5 (Fig. 1 u. 2) oder auch ganzer miteinander verschalteter, konzentrisch zur Längsachse 17 (Fig. 1 u. 2) angeordneter, Leuchtdiodenringe 5 (Fig. 1 u. 2) vorhanden ist.

In Figur 5 ist der Verlauf des durch den Lüfter 13 erzeugten Kühlluftstroms 14 durch die Vorrichtung 1 angedeutet. Zu erkennen ist, dass der Kühlluftstrom 14 über einen Ansaugbereich 20 von dem Lüfter 13 in das Innere des unteren Reflektors 8 geleitet wird. An der Konusform des unteren Reflektors 8 wird der Kühlluftstrom 14 kanalisiert, bevor der Kühlluftstrom 14 im Bereich der Platinen 9, 10 (Fig. 2) durch einen Verteilerkegel 21 in den weitergeführten Hauptkühlluftstrom 14 und mehrere Teilluftströme 15 aufgeteilt wird. Der konzentrisch zur Längsachse 17 (Fig. 1 u. 2) des Gehäuses 2 angeordnete Verteilerkegel 21 teilt den Kühlluftstrom 14 in mehrere Teilluftströme 15 auf und leitet diese radial nach außen, damit diese an den Rückseiten der Leuchtdioden 5 (Fig. 2) angeordnete Kühlkörper 16 kühlen. Die Aufteilung des Kühlluftstroms 14 in mehrere Teilluftströme 15 sorgt so für eine effektive Kühlung der Leuchtdioden 5 (Fig. 2). Wie zu erkennen ist, bilden die beiden Platinen 9, 10 (Fig. 2) rückseitig radial nach außen verlaufende Kanäle für die Teilluftströme 15. Der Kühlluftstrom 14 wird außerdem weiter in Richtung der Längsachse 17 (Fig. 2) des Gehäuses 2 durch das Innere des oberen Reflektors 7 weitergeleitet und kühlt hier zusätzlich das dort angeordnete Kameramodul 19.

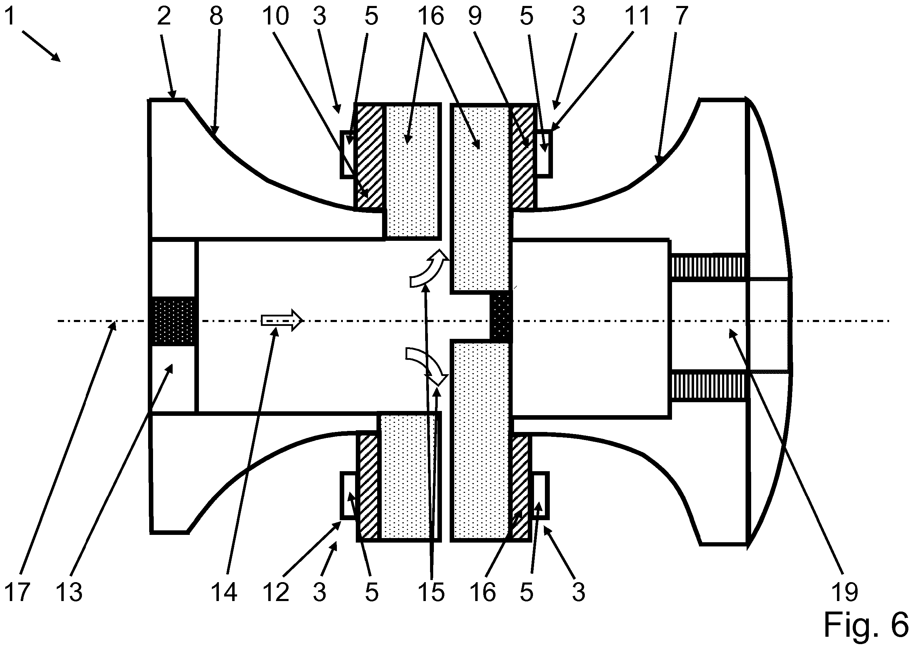

Die Figur 6 zeigt eine erfindungsgemäße Vorrichtung 1 zur Aushärtung eines in UV-härtendem Kunstharz getränkten Kunststoffschlauchs 100 (Fig. 1) in einem Kanalrohr 101 (Fig. 1). Die Vorrichtung 1 weist eine UV-Strahlung 4 (Fig. 4) emittierende Lichtquelle 3 auf, welche durch UV-Strahlung 4 (Fig. 4) emittierende Leuchtdioden 5 gebildet ist. Im Gehäuse 2 sind die Leuchtdioden 5 so ausgerichtet, dass die Hauptabstrahlrichtung 6 (Fig. 4) der von den Leuchtdioden 5 emittierten UV-Strahlung 4 (Fig. 4) im Wesentlichen parallel zur Längsachse 17 des Gehäuses 2 orientiert ist. Im Wesentlichen bedeutet auch in in diesem Zusammenhang, dass die Hauptabstrahlrichtung gemäß der Abstrahlcharakteristik der Leuchtdioden 5 parallel zur Längsachse 17 des Gehäuses 2 orientiert ist. Die Lichtquelle 3 ist auch bei dieser Ausführung durch zwei Platinen 9, 10 gebildet, die jeweils mehrere auf den Platinen 9, 10 in einer Ebene nebeneinander angeordnete Leuchtdioden 5 umfassen. Die Strahlung 4 (Fig. 4) emittierenden Leuchtdioden 5 sind vorderseitig auf den Platinen 9, 10 angeordnet, wobei die Platinen 9, 10 im Gehäuse 2 rückseitig zueinander weisend angeordnet sind. Die von den Leuchtdioden 5 der beiden Platinen 9, 10 emittierte UV-Strahlung 4 (Fig. 4) trifft auch hier jeweils auf einen Reflektor 7, 8, der die emittierte Strahlung 4 (Fig. 4) radial zur Längsachse 17 des Gehäuses 2 reflektiert, sodass die emittierte Strahlung 4 (Fig. 4) quer zur Bearbeitungsrichtung 102 auf den zu härtenden Kunststoffschlauch 100 (Fig. 1) trifft. Der Strahlengang der durch die Leuchtdioden 5 emittierten UV-Strahlung 4 (Fig. 4) ist in Figur 4 beispielhaft angedeutet. Die Reflektoren 7, 8 bilden jeweils eine Konusform, wobei die Konusform mit der Längsachse 17 des Gehäuses 2 übereinstimmt. Die Anordnung der Reflektoren 7, 8 sorgt für eine radiale Zunahme des Konusdurchmessers von der Lichtquelle 3 entlang der Längsachse 17. Die Oberfläche der Reflektoren 7, 8 weist zudem eine konkave Krümmung auf, welche die durch die Leuchtdioden 5 emittierte UV-Strahlung 4 (Fig. 4) auf der Oberfläche des zu härtenden Kunststoffschlauchs 100 konzentriert. Die Leuchtdioden 5 sind auch hier bevorzugt gruppenweise in konzentrischen Ringen 11, 12 um die Längsachse 17 des Gehäuses 2 angeordnet. In diesen konzentrischen Ringen 11, 12 sind die Leuchtdioden 5 gruppenweise miteinander verschaltet. In einer bevorzugten Ausführung werden 16 bis 18 Leuchtdioden 5 pro Platine verwendet. Die Leuchtdioden können auch in 4er Cluster eingesetzt werden. An der Rückseite der Platinen 9, 10 sind Kühlkörper 16 zur Kühlung der Strahlungsquelle 3 angeordnet. Im linken Gehäuseteil des Gehäuses 2 ist ein Lüfter 13 zur Erzeugung eines Kühlluftstroms 14 (Fig. 5) zur Kühlung der Leuchtdioden 5 vorgesehen. Der Kühlluftstrom 14 wird in mehrere Teilluftströme 15 aufgeteilt und radial nach außen geleitet, damit die Teilluftströme 15 die an den Rückseiten der Leuchtdioden 5 (Fig. 2) angeordneten Kühlkörper 16 kühlen. Die Aufteilung des Kühlluftstroms 14 in mehrere Teilluftströme 15 sorgt so für eine effektive Kühlung der Leuchtdioden 5 (Fig. 2). Wie zu erkennen ist, bilden die beiden Platinen 9, 10 (Fig. 2) rückseitig radial nach außen verlaufende Kanäle für die Teilluftströme 15. Eine besonders effektive Kühlung der Leuchtdioden 5 wird erreicht, indem die in den Kunststoffschlauch 100 zur Anlage am Kanalrohr 101 eingeleitete Luft extern gekühlt wird. Im rechten Gehäuseteil des Gehäuses 2 ist ein Kameramodul 19 eingebaut, mit welchem die erfolgte Aushärtung, die Lage des Kunststoffschlauchs 100 im Kanalrohr 101 und die Position der Vorrichtung 1 im Kanalrohr 101 überprüft werden kann.

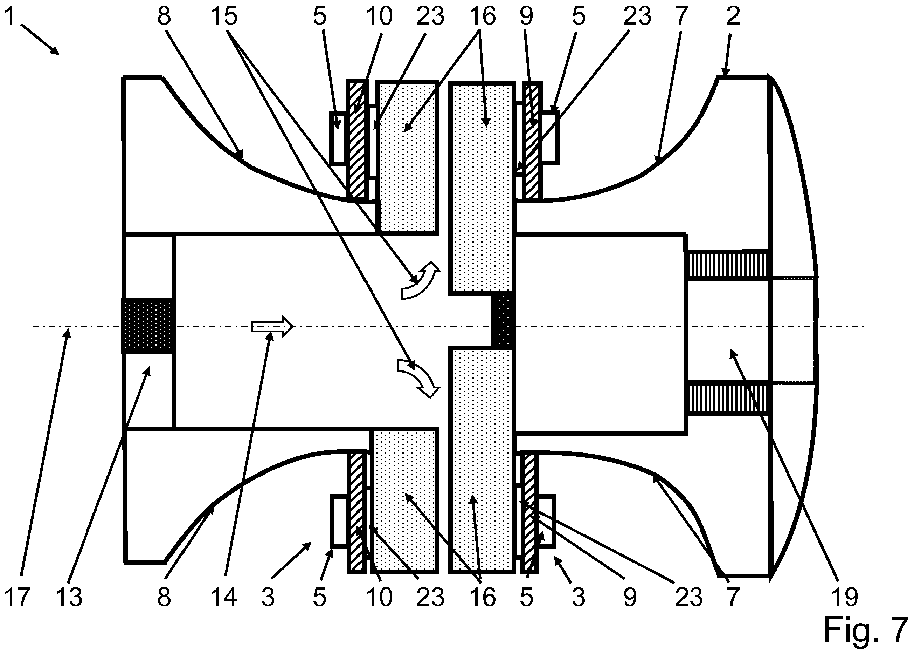

Die Figur 7 zeigt eine erfindungsgemäße Vorrichtung 1 zur Aushärtung eines in UV-härtendem Kunstharz getränkten Kunststoffschlauchs 100 (Fig. 1) in einem Kanalrohr 101 (Fig. 1). Im Unterschied zu der Ausgestaltung gemäß Figur 6 sind hier zwischen den mit Leuchtdioden 5 bestückten Platinen 9, 10 und den Kühlkörpern 16 Peltierelemente 23 angeordnet. Die Peltierelemente 23 sind rückseitig an den mit Leuchtdioden 5 bestückten Platinen 9, 10 angeordnet. Hierdurch kühlen die Peltierelemente 23 die Leuchtdioden 5 und führen die Abwärme an die angekoppelten Kühlkörper 16 ab. Hierdurch unterstützen die Peltierelemente 23 aktiv die Abgabe der Abwärme der Leuchtdioden 5 über die Kühlkörper 16 an die Umgebung. So wird im Gehäuse 2 eine effektive Kühlung der Leuchtdioden 5 durch den Kühlluftstrom 14 zur Kühlung der Leuchtdioden 5 erreicht. Zwischen den zwei Platinen 9, 10 mit vorderseitig UV-Strahlung emittierenden Leuchtdioden 5 im Gehäuse 2 sind die rückseitig Kühlkörper 16 angeordnet, die mit den Peltierelementen 23 zwischen den Platinen 9, 10 und den Kühlkörpern 16 für eine verbesserte Kühlung der Leuchtdioden 5 durch den zwischen den Platinen 9, 10 radial nach außen geleiteten Teilluftstrom 15 sorgen.

### Bezuaszeichenliste

- 1: Vorrichtung
- 2: Gehäuse
- 3: Lichtquelle
- 4: UV-Strahlung
- 5: Leuchtdiode
- 6: Hauptabstrahlrichtung
- 7: Reflektor A
- 8: Reflektor B
- 9: Platine A
- 10: Platine B
- 11: Ring A
- 12: Ring B
- 13: Lüfter
- 14: Kühlluftstrom
- 15: Teilluftstrom
- 16: Kühlkörper
- 17: Längsachse
- 18: Borsten
- 19: Kameramodul
- 20: Ansaugbereich
- 21: Verteilerkegel
- 22: Sensor
- 23: Peltierelement
- 50: System
- 51: Kugelgelenke
- 100: Kunststoffschlauch
- 101: Kanalrohr
- 102: Bearbeitungsrichtung

## Patentansprüche

1. Vorrichtung (1) zur Aushärtung eines in UV-härtendem Kunstharz getränkten Kunststoffschlauchs (100) in einem Kanalrohr (101), mit
- einem länglichen Gehäuse (2), dessen Längsachse sich in Bearbeitungsrichtung (102) längs des Kanalrohres (100) erstreckt, und
- wenigstens einer UV-Strahlung emittierenden Lichtquelle (3), wobei die Lichtquelle (3) durch mehrere eine UV-Strahlung (4) emittierende Leuchtdioden (5) gebildet ist, wobei die Leuchtdioden (5) im Gehäuse (2) so in Bearbeitungsrichtung (102) ausgerichtet sind, dass die Hauptabstrahlrichtung (6) der von den Leuchtdioden (5) emittierten UV-Strahlung (4) im Wesentlichen parallel zur Längsachse des Gehäuses (2) orientiert ist, wobei die emittierte UV-Strahlung (4) auf mindestens einen Reflektor (7, 8) trifft, der die emittierte UV-Strahlung (4) radial zur Längsachse des Gehäuses (2) reflektiert, sodass die emittierte UV-Strahlung (4) quer zur Bearbeitungsrichtung (102) auf den zu härtenden Kunststoffschlauch (100) trifft,
**dadurch gekennzeichnet,**
**dass** die Lichtquelle (3) mehrere Platinen (9, 10) umfasst, wobei die Lichtquelle (3) mehrere auf den Platinen (9, 10) jeweils in einer Ebene nebeneinander angeordnete Leuchtdioden (5) umfasst, wobei mindestens zwei Platinen (9, 10) mit vorderseitig UV-Strahlung (4) emittierenden Leuchtdioden (4) im Gehäuse (2) rückseitig zueinander orientiert angeordnet sind.

2. Vorrichtung (1) nach Anspruch 1, **dadurch gekennzeichnet, dass** mehrere Leuchtdioden (4) gruppenweise in konzentrischen Ringen (11, 12) verschaltet sind.

3. Vorrichtung (1) nach Anspruch 1 oder 2, **dadurch gekennzeichnet, dass** der mindestens eine Reflektor (7, 8) eine Konusform aufweist, wobei die Konusachse mit der Längsachse des Gehäuses (2) zusammenfällt.

4. Vorrichtung nach einem der Ansprüche 1 bis 3, **dadurch gekennzeichnet, dass** die Oberfläche des Reflektors (7, 8) eine konkave Krümmung aufweist, so dass die emittierte UV-Strahlung (4) auf der Oberfläche des zu härtenden Kunststoffschlauchs (100) konzentriert wird.

5. Vorrichtung nach einem der Ansprüche 1 bis 3, **dadurch gekennzeichnet, dass** die Oberfläche des Reflektors (7, 8) eine konvexe Krümmung aufweist, so dass die emittierte UV-Strahlung (4) auf der Oberfläche des zu härtenden Kunststoffschlauchs (100) verteilt wird.

6. Vorrichtung (1) nach einem der Ansprüche 1 bis 5, **dadurch gekennzeichnet, dass** im Gehäuse (2) mindestens zwei Reflektoren (7, 8) angeordnet sind.

7. Vorrichtung (1) nach einem der Ansprüche 1 bis 6, **dadurch gekennzeichnet, dass** im Gehäuse (2) mindestens ein Lüfter (13) zur Erzeugung eines Kühlluftstromes (14) zur Kühlung der Leuchtdioden (4) vorgesehen ist.

8. Vorrichtung (1) nach Anspruch 7, **dadurch gekennzeichnet, dass** der Kühlluftstrom (14) in Richtung der Längsachse des Gehäuses (2) durch das Innere mindestens eines Reflektors (7, 8) passiert.

9. Vorrichtung (1) nach Anspruch 7 oder 8, **dadurch gekennzeichnet, dass** zumindest ein Teilluftstrom (15) des Kühlluftstromes (14) entlang mindestens einer Rückseite einer Leuchtdiode (5) bzw. einer Platine (9, 10) radial nach außen geleitet wird, um an der Rückseite der Leuchtdiode (5) bzw. der Platine (9, 10) angeordnete Kühlkörper (16) zu kühlen.

10. Vorrichtung (1) nach einem der Ansprüche 1 bis 9, **dadurch gekennzeichnet, dass** im Gehäuse (2) mindestens ein Peltierelement (23) zur Kühlung der Leuchtdioden (4) vorgesehen ist.

11. Vorrichtung (1) nach einem der Ansprüche 1 bis 10, **dadurch gekennzeichnet, dass** die Lichtquelle (3) UV-Strahlung (4) nur in einem Spektralbereich mit einer Wellenlänge von 360 bis 420 nm, vorzugsweise von 380 bis 410 nm, weiter vorzugsweise von 395-400 nm, emittiert.

12. Vorrichtung (1) nach einem der Ansprüche 1 bis 11, **dadurch gekennzeichnet, dass** die Vorrichtung (1) mindestens einen Sensor (22) aufweist, der dazu ausgebildet ist, die Intensität der von der Leuchtdiode (5) emittierten UV-Strahlung (4) zu erfassen.

13. System (50) mit mindestens zwei Vorrichtungen (1) nach einem der Ansprüche 1 bis 12, wobei die einzelnen Vorrichtungen (1) des Systems (50) über Kugelgelenke (51) in Bearbeitungsrichtung (102) hintereinander gekoppelt sind.

## Claims

1. Device (1) for curing a plastic hose (100) impregnated in UV-curing synthetic resin in a sewer pipe (101), with
- an elongated housing (2), the longitudinal axis of which extends in the processing direction (102) along the sewer pipe (100), and
- at least one light source (3) emitting UV radiation, wherein the light source (3) is formed by a plurality of light emitting diodes (5) emitting UV radiation (4), wherein the light emitting diodes (5) in the housing (2) are oriented in the processing direction (102) such that the main radiation direction (6) of the UV radiation (4) emitted by the light emitting diodes (5) is oriented substantially parallel to the longitudinal axis of the housing (2), wherein the emitted UV radiation (4) impinges on at least one reflector (7, 8) which reflects the emitted UV radiation (4) radially to the longitudinal axis of the housing (2) so that the emitted UV radiation (4) impinges transversely to the processing direction (102) on the plastic hose (100) to be cured,
**characterized in that**
**in that** the light source (3) comprises a plurality of circuit boards (9, 10), wherein the light source (3) comprises a plurality of light-emitting diodes (5) which are in each case arranged next to one another in one plane on the circuit boards (9, 10), wherein at least two circuit boards (9, 10) having light-emitting diodes (4) which emit UV radiation (4) on the front side being arranged in the housing (2) in a manner oriented towards one another on the rear side.

2. Device (1) according to claim 1, **characterized in that** several light-emitting diodes (4) are connected in groups in concentric rings (11, 12).

3. Device (1) according to claim 1 or 2, **characterized in that** the at least one reflector (7, 8) has a cone shape, wherein the cone axis coincides with the longitudinal axis of the housing (2).

4. Device according to any one of claims 1 to 3, **characterized in that** the surface of the reflector (7, 8) has a concave curvature so that the emitted UV radiation (4) is concentrated on the surface of the plastic hose (100) to be cured.

5. Device according to any one of claims 1 to 3, **characterized in that** the surface of the reflector (7, 8) has a convex curvature so that the emitted UV radiation (4) is distributed on the surface of the plastic hose (100) to be cured.

6. Device (1) according to any one of claims 1 to 5, **characterized in that** at least two reflectors (7, 8) are arranged in the housing (2).

7. Device (1) according to any one of claims 1 to 6, **characterized in that** at least one chutter (13) is provided in the housing (2) for generating a cooling air flow (14) for cooling the light-emitting diodes (4).

8. Device (1) according to claim 7, **characterized in that** the cooling air flow (14) passes in the direction of the longitudinal axis of the housing (2) through the interior of at least one reflector (7, 8).

9. Device (1) according to claim 7 or 8, **characterized in that** at least a partial air flow (15) of the cooling air flow (14) is directed radially outwards along at least one rear side of a light-emitting diode (5) or a circuit board (9, 10) in order to cool radiators (16) arranged on the rear side of the light-emitting diode (5) or the circuit board (9, 10).

10. Device (1) according to any one of claims 1 to 9, **characterized in that** at least one Peltier element (23) is provided in the housing (2) for cooling the light-emitting diodes (4).

11. Device (1) according to any one of claims 1 to 10, **characterized in that** the light source (3) emits UV radiation (4) only in a spectral range with a wavelength of from 360 to 420 nm, preferably from 380 to 410 nm, further preferably from 395-400 nm.

12. Device (1) according to any one of claims 1 to 11, **characterized in that** the device (1) has at least one sensor (22) which is designed to detect the intensity of the UV radiation (4) emitted by the light-emitting diode (5).

13. System (50) comprising at least two devices (1) according to any one of claims 1 to 12, wherein the individual devices (1) of the system (50) are coupled in series via ball joints (51) in the processing direction (102).

## Revendications

1. Dispositif (1) pour le durcissement d'un tuyau en plastique (100) imprégné de résine synthétique durcissant aux UV dans un tuyau de canalisation (101), avec
- un boîtier allongé (2) dont l'axe longitudinal s'étend dans la direction de traitement (102) le long du tuyau de canalisation (100), et
- au moins une source lumineuse (3) émettant un rayonnement UV, la source lumineuse (3) étant formée par plusieurs diodes électroluminescentes (5) émettant un rayonnement UV (4), les diodes électroluminescentes (5) étant orientées dans le boîtier (2) dans la direction de traitement (102) de telle sorte que la direction de rayonnement principale (6) du rayonnement UV (4) émis par les diodes électroluminescentes (5) est orientée sensiblement parallèlement à l'axe longitudinal du boîtier (2), le rayonnement UV (4) émis rencontre au moins un réflecteur (7, 8) qui réfléchit le rayonnement UV (4) émis radialement par rapport à l'axe longitudinal du boîtier (2), de sorte que le rayonnement UV (4) émis rencontre le tuyau en plastique (100) à durcir transversalement à la direction de traitement (102),
**caractérisé en ce que**
la source lumineuse (3) comprend plusieurs platines (9, 10), la source lumineuse (3) comprenant plusieurs diodes électroluminescentes (5) disposées sur les platines (9, 10) respectivement l'une à côté de l'autre dans un plan, au moins deux platines (9, 10) avec des diodes électroluminescentes (4) émettant un rayonnement UV (4) sur la face avant étant disposées dans le boîtier (2) orientées l'une vers l'autre sur la face arrière.

2. Dispositif (1) selon la revendication 1, **caractérisé en ce que** plusieurs diodes électroluminescentes (4) sont connectées par groupes dans des anneaux concentriques (11, 12).

3. Dispositif (1) selon la revendication 1 ou 2, **caractérisé en ce que** le au moins un réflecteur (7, 8) présente une forme conique, l'axe du cône coïncidant avec l'axe longitudinal du boîtier (2).

4. Dispositif selon l'une des revendications 1 à 3, **caractérisé en ce que** la surface du réflecteur (7, 8) présente une courbure concave, de sorte que le rayonnement UV (4) émis est concentré sur la surface du tuyau en plastique (100) à durcir.

5. Dispositif selon l'une des revendications 1 à 3, **caractérisé en ce que** la surface du réflecteur (7, 8) présente une courbure convexe, de sorte que le rayonnement UV (4) émis est réparti sur la surface du tuyau en plastique (100) à durcir.

6. Dispositif (1) selon l'une des revendications 1 à 5, **caractérisé en ce qu'**au moins deux réflecteurs (7, 8) sont disposés dans le boîtier (2).

7. Dispositif (1) selon l'une des revendications 1 à 6, **caractérisé en ce qu'**il est prévu dans le boîtier (2) au moins un ventilateur (13) pour générer un flux d'air de refroidissement (14) pour refroidir les diodes électroluminescentes (4).

8. Dispositif (1) selon la revendication 7, **caractérisé en ce que** le flux d'air de refroidissement (14) passe à l'intérieur d'au moins un réflecteur (7, 8) dans la direction de l'axe longitudinal du boîtier (2).

9. Dispositif (1) selon la revendication 7 ou 8, **caractérisé en ce qu'**au moins un flux d'air partiel (15) du flux d'air de refroidissement (14) est dirigé radialement vers l'extérieur le long d'au moins un côté arrière d'une diode électroluminescente (5) ou d'une platine (9, 10) afin de refroidir des corps de refroidissement (16) disposés sur le côté arrière de la diode électroluminescente (5) ou de la platine (9, 10).

10. Dispositif (1) selon l'une des revendications 1 à 9, **caractérisé en ce qu'**il est prévu dans le boîtier (2) au moins un élément Peltier (23) pour refroidir les diodes électroluminescentes (4).

11. Dispositif (1) selon l'une des revendications 1 à 10, **caractérisé en ce que** la source lumineuse (3) émet un rayonnement UV (4) uniquement dans une plage spectrale ayant une longueur d'onde de 360 à 420 nm, de préférence de 380 à 410 nm, continuer de préférence de 395 à 400 nm.

12. Dispositif (1) selon l'une des revendications 1 à 11, **caractérisé en ce que** le dispositif (1) comporte au moins un capteur (22) qui est conçu pour détecter l'intensité du rayonnement UV (4) émis par la diode électroluminescente (5).

13. Système (50) comprenant au moins deux dispositifs (1) selon l'une des revendications 1 à 12, dans lequel les différents dispositifs (1) du système (50) sont couplés les uns derrière les autres dans la direction de traitement (102) par l'intermédiaire de rotules (51).
